# EUROPÄISCHE PATENTANMELDUNG

(11) **EP 1 281 555 A1**
(43) Veröffentlichungstag der Anmeldung: **05.02.2003**
(21) Anmeldenummer: 02014615.5
(22) Anmeldetag: 02.07.2002
(51) Int. Cl.: B60J 7/22

(54) **Windabweiser für ein Fahrzeugdach oder ein Dachmodul sowie Fahrzeugdach und Dachmodul für ein Fahrzeug**

(30) Priorität: 01.08.2001 DE 10137363
(71) Anmelder: Webasto Vehicle Systems International GmbH, 82131 Stockdorf (DE)
(72) Erfinder: Färber, Manfred, 82407 Wielenbach (DE); Karami, Jadi, 85521 Ottobrunn (DE); Czarnowski von, Bodo, 81249 München (DE)
(74) Vertreter: Wiese, Gerhard

(57) **Zusammenfassung**

Die Erfindung betrifft einen Windabweiser (1) für ein verschließbares Fahrzeugdach (2) oder ein Dachmodul, bei dem der Windabweiser (1) eine flexible Schicht (3) aufweist, die insbesondere zumindest in Teilbereichen als luftdurchlässiges Netz ausgebildet ist und an wenigstens zwei gegenüberliegenden Seiten an Streben (4, 5) befestigt ist, wobei eine der Streben (4, 5) seitlich mit einem an einem Dachrahmen (6) des Fahrzeugdachs (2) angeordneten schwenkbaren Austellarm (7) verbunden ist und an der Schicht (3) mindestens eine weitere Strebe (8) befestigt ist, die mit einem weiteren schwenkbaren Ausstellarm (9) verbunden ist. Ferner betrifft die Erfindung ein Fahrzeugdach (2) mit einem Windabweiser (1) sowie ein Dachmodul für ein Fahrzeug mit einem Windabweiser (1).

## Beschreibung

Die Erfindung betrifft einen Windabweiser für ein verschließbares Fahrzeugdach oder ein Dachmodul, bei dem der Windabweisers eine flexible Schicht aufweist, die insbesondere zumindest in Teilbereichen als luftdurchlässiges Netz ausgebildet und an wenigstens zwei gegenüberliegenden Seiten an Streben befestigt ist, wobei eine der Streben seitlich mit einem an einem Dachrahmen des Fahrzeugdachs angeordneten schwenkbaren Ausstellarm verbunden ist. Ferner betrifft die Erfindung ein Fahrzeugdach mit einem Windabweiser und ein Dachmodul für ein Fahrzeug mit einem Windabweiser.

Als Stand der Technik ist aus der DE 40 39 485 C1 eine Vorrichtung zur Geräusch- und Schwingungsminderung an tangential überströmten Öffnungen von Kraftfahrzeugen, insbesondere an Schiebedachöffnungen, bekannt, wobei ein von der Fahrzeugkontur nach außen abstehender Windabweiser vorgesehen ist, der zumindest in Teilbereichen seiner Fläche mit einem luftdurchlässigen Netz versehen ist. In der DE 196 03 670 C1 wird ein Windabweiser für ein öffnungsfähiges Fahrzeugdach beschrieben, wobei die den Körper des Windabweisers bildende dünnwandige Schicht an zwei gegenüberliegenden Seiten an Streben befestigt ist, die zu Reinigungszwecken lösbar am Fahrzeugdach oder an einem mit diesem verbundenen Teil angebracht sind.

Die in den angegebenen Schutzrechten beschriebenen Windabweiser besitzen in geöffnetem Zustand jedoch noch teilweise eine unerwünschte Geräusch- und Schwingungsentwicklung und können ferner nicht über eine definierte Faltung des luftdurchlässigen Netzes bzw. der dünnwandigen Schicht in den geschlossenen Zustand überführt werden.

Der Erfindung liegt die Aufgabe zugrunde, einen Windabweiser für ein verschließbares Fahrzeugdach oder ein Dachmodul anzubieten, der im geöffneten Zustand Geräusche und Schwingungen wirksam unterdrückt und über eine definierte Faltung des Netzes oder der dünnwandigen Schicht in den geschlossenen Zustand überführt werden kann. Ferner soll ein Fahrzeugdach mit einem Windabweiser und ein Dachmodul für ein Fahrzeug mit einem Windabweiser mit den angegebenen Zielen angeboten werden.

Für den Windabweiser wird die Aufgabe durch die Merkmale des kennzeichnenden Teils des Patentanspruchs 1 in Verbindung mit den Merkmalen des Oberbegriffs gelöst. Vorteilhafte Ausführungsformen des Windabweisers werden in den Unteransprüchen 2 bis 9 beschrieben. Eine Lösung der Aufgabe für das Fahrzeugdach erfolgt durch die Merkmale des Patentanspruchs 10. Für das Dachmodul für ein Fahrzeug mit einem Windabweiser wird die Aufgabe durch die Merkmale des Patentanspruchs 11 gelöst.

Beim erfindungsgemäßen Windabweiser ist mindestens eine weitere Strebe zur Befestigung der flexiblen Schicht vorgesehen, wobei die weitere Strebe seitlich mit einem weiteren schwenkbaren Ausstellarm zur Stabilisierung des Windabweisers und zur Unterdrückung von unerwünschten Geräuschen und Schwingungen (Wummern) vorgesehen ist. Ferner wird durch die weitere Strebe eine definierte Faltung der den Körper des Windabweiser bildenden flexiblen Schicht beim Schließen des Windabweisers erreicht.

In einer vorteilhaften Ausführungsform sind die schwenkbaren Ausstellarme zur Halterung der Streben lösbar am Fahrzeugdach oder einem mit diesem verbundenen Teil angebracht. Im geöffneten Zustand des Windabweisers sind derartige Ausstellarme aufgestellt, während sich die Ausstellarme im geschlossenen Zustand des Windabweisers am Fahrzeugdach oder an einem mit diesem verbundenen Teil anlegen.

Vorteilhafterweise besitzt der Windabweiser eine erste obere Strebe und eine zweite untere Strebe und die weitere Strebe ist im wesentlichen mittig zwischen der ersten oberen und der zweiten unteren Strebe angebracht. Durch Stabilisierung der einzelnen Streben durch Ausstellarme oder durch Befestigung z.B. über Klemmleisten- oder Clipverbindung kann der Windabweiser über seine gesamte Fläche im geöffneten Zustand wunschgemäß stabilisiert werden.

Die den Körper des Windabweisers bildende (dünnwandige) flexible Schicht ist insbesondere als Netzteil (Netzwindabweiser) ausgebildet und besitzt vorteilhafterweise mindestens eine Schlaufe, durch welche eine Strebe zur Befestigung an der Schicht hindurchführbar ist. Die schwenkbaren Teile können über bewegbare Halteteile insbesondere lösbar mit den Streben verbunden sein. Derartige Halteteile sind an sich bekannt und können als Rändelmutter oder Rändelschraube ausgebildet sein. Hierdurch können die Halteteile ohne zusätzliches Werkzeug z.B. zur Reinigung des Windabweisers von den Streben entfernt werden.

Zur weiteren Stabilisierung und Geräuschminderung des Windabweisers können weitere schwenkbare Teile vorgesehen sein, die ebenfalls als Ausstellarme ausgebildet sein können und insbesondere in seitlicher Richtung im wesentlichen mittig zwischen den seitlich an den Streben angebrachten bisherigen Ausstellarmen angebracht sind. Damit wird der sich im wesentlichen über die gesamte Breite des Fahrzeugdachs erstreckende Windabweiser auch über seine gesamte Breite durch insbesondere mehrere zwischen der linken und rechten Seite des Fahrzeugs angeordnete bewegbare Teile stabilisiert. Derartige im Zwischenbereich oder in der Mitte angeordnete bewegbare Teile können als Stützdrähte oder als Stützblenden ausgebildet sein. Diese tragbaren Teile sind auch insbesondere lösbar am Fahrzeugdach oder an einem mit diesem verbundenen Teil angebracht.

Eine weitere strömungstechnische Optimierung des Windabweisers wird durch Profilelemente erreicht, die sich über die gesamte Bereite oder einzelne Teilbereiche des Windanweisers erstrecken. Insbesondere sind derartige Profilelemente mit der oberen Strebe des Windabweisers verbunden. Durch Ausbildung der Profilelemente im Querschnitt in Form von Tragflächen entstehen gewünschte strömungstechnische Effekte zur Stabilisierung des geöffneten Windabweisers.

Das erfindungsgemäße Fahrzeugdach mit einem Windabweiser kann die bereits beschriebenen Merkmale eines Windabweisers mit den damit verbundenen Vorteilen besitzen. Dies gilt auch für das erfindungsgemäße Dachmodul für ein Fahrzeug mit einem Windabweiser.

Weitere Einzelheiten der Erfindung gehen aus den Zeichnungsfiguren hervor. Es zeigen:
- Fig. 1: eine schematische perspektivische Darstellung eines Fahrzeugdachs,
- Fig. 2: einen Querschnitt A-A durch den vorderen Rand eines Fahrzeugdachs gemäß Fig. 1 mit einem Windabweiser im geöffneten Zustand,
- Fig. 3: einen Querschnitt A-A durch den vorderen Rand eines Fahrzeugdachs gemäß Fig. 1 mit einem Windabweiser im teilweise geschlossenen Zustand sowie
- Fig. 4: eine perspektivische Teildarstellung des Windabweisers im teilweise geschlossenen Zustand.

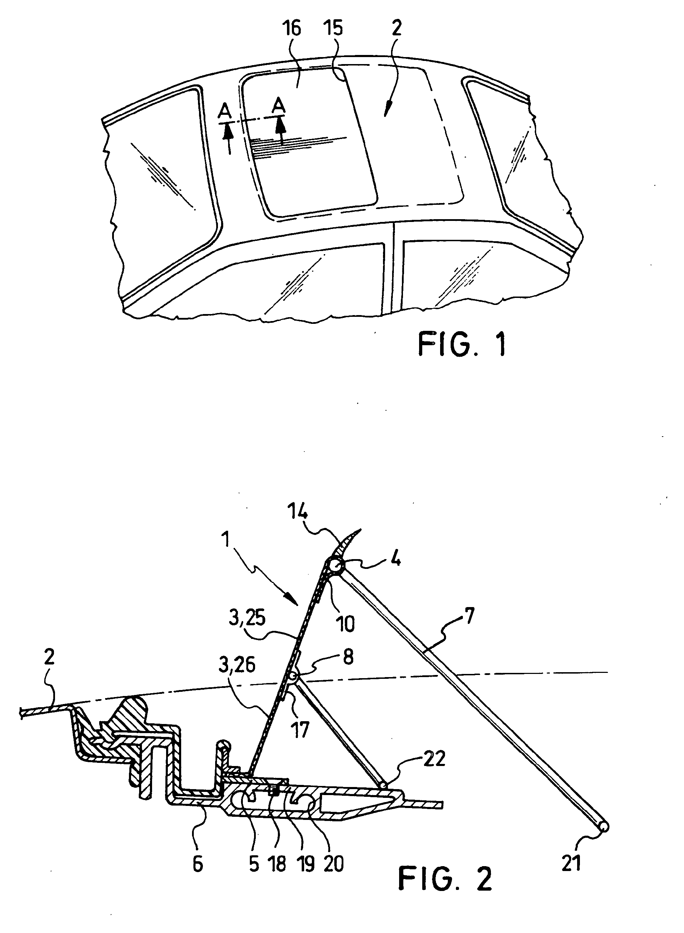

Fig. 1 zeigt ein Fahrzeugdach 2 (bzw. ein im Bereich der Strichlinien eingesetztes Dachmodul für ein Fahrzeug) mit einer Dachöffnung 15, welche mittels eines im geschlossenen Zustand abgebildeten Deckels 16 wahlweise verschließbar oder (teilweise) freilegbar ist. Unterhalb der Dachöffnung 15 befindet sich ein Dachrahmen 6, an dem an sich bekannte Elemente, z.B. Führungsschienen oder Gleitschuhe, für eine Bewegung des Deckels 16 angeordnet sind (nicht abgebildet). Der Dachrahmen 6 besitzt in einem vorderen Bereich und in den seitlichen Bereichen eine Kabelführung 20 zur Aufnahme von verschiebbar gelagerten Antriebskabeln, welche über eine Handkurbel oder einen Elektroantrieb antreibbar sind. Oberhalb der Kabelführung 20 befindet sich eine Kabelkanalabdeckung 19.

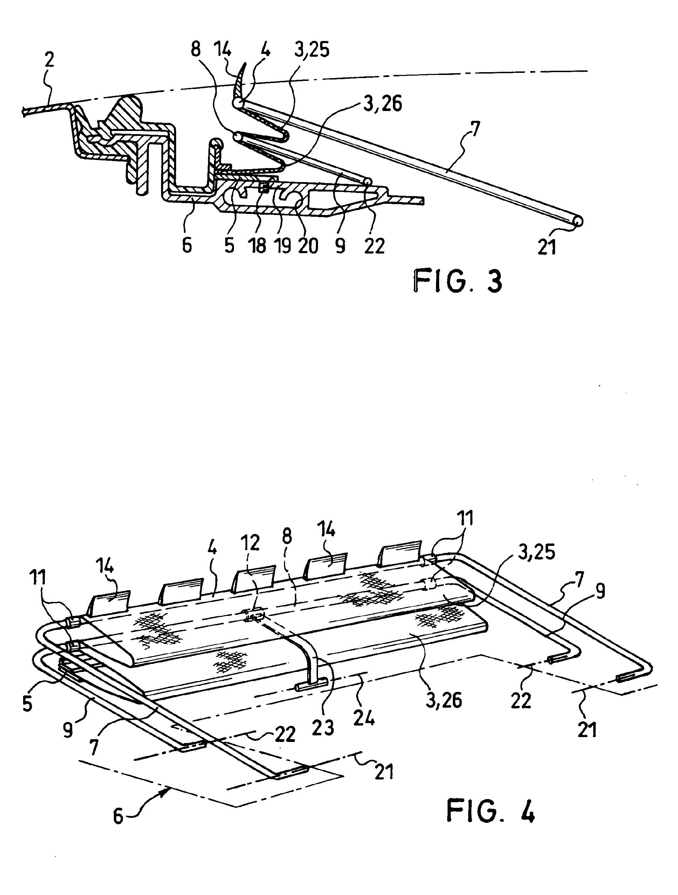

Fig. 2 zeigt das Fahrzeugdach 2 mit geöffnetem Deckel 16, wobei am vorderen Rand der Dachöffnung 15 ein Windabweiser 1 derart angeordnet, daß dieser bei nach hinten verschobenem geöffneten Deckel 16 (vgl. Fig. 2) über schwenkbare Ausstellarme 7 (oder Bügel) nach oben über das Fahrzeugdach 2 ausstellbar ist. In dem in Fig. 2 abgebildeten ausgestellten und geöffneten Zustand des Windabweisers 1 befinden sich der mit der oberen Strebe 4 verbundene schwenkbare Ausstellarm 7 sowie der mit der weiteren Strebe 8 verbundene weitere schwenkbare Ausstellarm 9 in einem um die Schwenkachsen 21, 22 nach oben geschwenkten ausgefahrenem und geöffneten Zustand. Die Schicht 3 ist damit gespannt und wird durch die weitere Strebe 8 und das weitere schwenkbare Teil 9 geräuschdämmend und schwingungshemmend stabilisiert. Am unteren Ende ist die Schicht 3 über die als Klemmleiste ausgebildete untere Strebe 5 über eine Schraube 18 mit der Kabelkanalabdeckung 19 bzw. dem Dachrahmen 6 verbunden, wie dies z.B. bereits aus der DE 196 03 670 C1 bekannt ist.

Fig. 3 zeigt einen teilweise geschlossenen Zustand des Windabweisers 1, wobei sich die obere Strebe 4 angenähert zur weiteren Strebe 8 befindet und die Schicht 3 in einem ersten Schichtabschnitt 25 zwischen oberer Strebe 4 und weiterer Strebe 8 und in einem zweiten Schichtabschnitt 26 zwischen weiterer Strebe 8 und unterer Strebe 5 definiert und reproduzierbar gefaltet wird. Die obere Strebe 4 und die weitere (mittlere) Strebe 8 sind durch Schlaufen 10 und 17 mit der Schicht 3 verbunden (vgl. Fig. 2). Das schwenkbare Teil 7 kann an seiner Schwenkachse 21 an einem in Fig. 2 und 3 nicht abgebildeten Bereich des Dachrahmens 6 angelenkt sein. An der oberen Strebe 4 kann ein Profilelement 14 mit strömungstechnisch optimiertem Querschnitt angebracht sein.

Aus Fig. 4 geht gemäß Fig. 3 eine Teildarstellung des Windabweisers 1 in teilweise geschlossenem Zustand hervor, wobei die Verbindung der schwenkbaren Ausstellarme 7 und 9 über Halteteile 11 mit der oberen Strebe 4 und der weiteren Strebe 8 dargestellt sind. Dabei können die Halteteile 11 lösbar ausgebildet sein und die aus der DE 196 03 670 C1 bekannten Ausführungsformen aufweisen.

Fig. 4 zeigt ferner ein weiteres schwenkbares Teil 23, welches etwa mittig zwischen den schwenkbaren Ausstellarmen 7, 9 drehbar um eine Schwenkachse 24 am schematisch dargestellten Dachrahmen 6 angebracht ist. Das weitere schwenkbare Teil 23 bewirkt eine weitere Stabilisierung des Windabweisers 1 und ist drehbar z.B. über eine Hülse 12 mit der Strebe 8 verbunden.

### Bezugszeichenliste

- 1: Windabweiser
- 2: Fahrzeugdach
- 3: Schicht
- 4: obere Strebe
- 5: untere Strebe
- 6: Dachrahmen
- 7: Ausstellarm
- 8: weitere Strebe
- 9: Ausstellarm
- 10: Schlaufe
- 11: Halteteil
- 12: Hülse
- 14: Profilelement
- 15: Dachöffnung
- 16: Deckel
- 17: Schlaufe
- 18: Schraube
- 19: Kabelkanalabdeckung
- 20: Kabelführung
- 21, 22: Schwenkachse
- 23: schwenkbares Teil
- 24: Schwenkachse
- 25: erster Schichtabschnitt
- 26: zweiter Schichtabschnitt

## Patentansprüche

1. Windabweiser (1) für ein verschließbares Fahrzeugdach (2) oder ein Dachmodul, bei dem der Windabweiser (1) eine flexible Schicht (3) aufweist, die insbesondere zumindest in Teilbereichen als luftdurchlässiges Netz ausgebildet ist und an wenigstens zwei gegenüberliegenden Seiten an Streben (4, 5) befestigt ist, wobei eine der Streben (4, 5) seitlich mit einem an einem Dachrahmen (6) des Fahrzeugdachs (2) angeordneten schwenkbaren Ausstellarm (7) verbunden ist, **dadurch gekennzeichnet, daß** an der Schicht (3) mindestens eine weitere Strebe (8) befestigt ist, die mit einem weiteren schwenkbaren Ausstellarm (9) verbunden ist.

2. Windabweiser (1) nach Anspruch 1 , **dadurch gekennzeichnet, daß** der Windabweiser (1) eine erste obere Strebe (4) und eine zweite untere Strebe (5) aufweist und die weitere Strebe (8) im aufgestellten Zustand des Windabweisers (1) etwa mittig zwischen der ersten und der zweiten Strebe (4, 5) angeordnet ist.

3. Windabweiser (1) nach einem der vorhergehenden Ansprüche, **dadurch gekennzeichnet, daß** die Schicht (3) mindestens eine Schlaufe (10, 17) aufweist, durch welche eine Strebe (4, 5, 8) zur Befestigung hindurchgeführt ist.

4. Windabweiser (1) nach einem der vorhergehenden Ansprüche, **dadurch gekennzeichnet, daß** mindestens eine Strebe (4, 5, 8) mit dem korrespondierenden schwenkbaren Teil (7, 9) über ein bewegbares Halteteil (11) verbunden ist.

5. Windabweiser (1) nach Anspruch 4, **dadurch gekennzeichnet, daß** das Halteteil (11) als Rändelmutter ausgebildet ist.

6. Windabweiser (1) nach einem der vorhergehenden Ansprüche, **dadurch gekennzeichnet, daß** das Halteteil (11) als Rändelschraube ausgebildet ist.

7. Windabweiser (1) nach einem der vorhergehenden Ansprüche, **dadurch gekennzeichnet, daß** mindestens ein Profilelement (14) zur Stabilisierung des Windabweisers (1) im ausgestellten und geöffneten Zustand vorgesehen ist.

8. Windabweiser (1) nach Anspruch 7, **dadurch gekennzeichnet, daß** das Profilelement (14) an der oberen Strebe (4) angebracht ist.

9. Windabweiser (1) nach Anspruch 7 oder 8, **dadurch gekennzeichnet, daß** das Profilelement (14) ein Tragflächenprofil aufweist.

10. Fahrzeugdach (2) mit einem Windabweiser (1) nach einem der Ansprüche 1 bis 9.

11. Dachmodul für ein Fahrzeug mit einem Windabweiser (1) nach einem der Ansprüche 1 bis 9.
